# EUROPEAN PATENT APPLICATION

(11) **EP 4 597 182 A1**
(43) Date of publication of application: **06.08.2025**
(21) Application number: 24773344.7
(22) Date of filing: 13.06.2024
(51) Int. Cl.: G02B 6/06, C03B 37/023

(54) **LIGHT CONE WITH HIGH UNIFORMITY AND HIGH TRANSMITTANCE, PREPARATION METHOD THEREFOR AND USE THEREOF**

(30) Priority: 30.11.2023 CN 202311624365
(71) Applicant: China Building Materials Academy Co., Ltd., Beijing 100024 (CN); China National Building Material Group Co., Ltd., Beijing 100036 (CN)
(72) Inventor: HUANG, Yonggang, Beijing 100024 (CN); XING, Yuwen, Beijing 100024 (CN); JIAO, Peng, Beijing 100024 (CN); FU, Yang, Beijing 100024 (CN); ZHANG, Jing, Beijing 100024 (CN); SONG, Puguang, Beijing 100024 (CN); DU, Yajie, Beijing 100024 (CN); WANG, Yun, Beijing 100024 (CN); JIANG, Dongyu, Beijing 100024 (CN)
(74) Representative: J A Kemp LLP
(86) International application number: PCT/CN2024/098869
(87) International publication number: WO 2025/112437

(57) **Abstract**

The present application relates to a light cone with high-uniformity and high-transmittance, and a preparation method and application thereof. The light cone includes a large end face portion, a small end face portion and an optical fiber portion arranged between the large end face portion and the small end face portion. A surface of the large end face portion and/or the small end face portion has a film whose thickness gradually decreases from a center to an edge. A technical problem to be solved is to obtain the light cone with high-uniformity and high-transmittance by improving a light cone drawn profile and coating a homogenizing film.

## Description

### CROSS-REFERENCE TO RELATED APPLICATIONS

The present application claims priority to Chinese Patent Application No. 202311624365.7, filed to the China Patent Office on November 30, 2023 and entitled "LIGHT CONE WITH HIGH-UNIFORMITY AND HIGH-TRANSMITTANCE, AND PREPARATION METHOD AND APPLICATION THEREOF", the entire content of which is incorporated herein by reference.

### TECHNICAL FIELD

The present application relates to a fiber optic image transmission element, in particular to a light cone with high-uniformity and high-transmittance, and a preparation method and application thereof.

### BACKGROUND

A light cone is widely applied to coupling of a charge-coupled device (CCD), an image intensifier and a photomultiplier tube in the fields of national defense, scientific research, criminal investigation, aerospace, medical care and the like, and also applied to radiography, novel fingerprint recognition, high-definition television imaging and advanced office facility images. In recent years, with rapid development of a digitalizing image processing technology, acquisition, storage and transmission of high-fidelity images become quite convenient, which significantly marks mankind's entry into a digital era. However, during warfare, scientific research, production and medical care, imperceptible images invisible to the naked eyes and imperceptible events usually need to be observed, analyzed and processed, for example, monitoring and observation need to be performed at night without illumination; and imaging study needs to be performed on an object emitting rays; and an aircraft moving at a high speed needs to be tracked and recognized. In these cases, image brightness is usually only in a range from 10⁻³ candela to 10⁻⁴ candela, or even lower. Thus, images have to be intensified and then observed, processed and analyzed, and a conventional digitalizing image processing technology has not met the requirement in this aspect. Using the fiber optic cone-coupled CCD for photomultiplier tube and the image intensifier is the best option to implement low-light-level imaging digitization and reduce a device size.

Among numerous factors, low coupling efficiency of an optical fiber light cone is mainly caused by low edge transmittance of the light cone, and poor edge coupling resolution capability causes poor imaging definition, which is greatly related to a preparation process of the optical fiber light cone. The light cone is obtained by melting-pressing and then high-temperature deformation of tens of millions of or even hundreds of millions of micron-sized optical fibers. An optical fiber in a center region of the light cone generates axial tension to form a straight conical optical fiber; and an optical fiber away from an axial center not only generates axial extension, but also generates radial displacement to form a curved conical optical fiber. Due to inconsistency of deformation degrees of the optical fibers in the center and the edge region, a difference occurs to distribution of transmittance of an output end face of the light cone, a tendency that the transmittance gradually decreases from the center to the edge region occurs, and this transmittance tendency is called a vignetting defect. The light-transmitting and non-uniform vignetting defect will degrade the coupling resolution capability of a light cone coupled photoelectric device.

### SUMMARY OF THE INVENTION

In view of this, a main objective of the present application is to provide a light cone with high-uniformity and high-transmittance, and a preparation method and application thereof. A technical problem to be solved is to obtain the high-uniformity and high-transmittance light cone by improving a light cone drawn profile and coating a homogenizing film.

The objective of the present application and solving of the technical problem are implemented through the following technical solution. A light cone with high-uniformity and high-transmittance provided by the present application includes a large end face portion, a small end face portion and an optical fiber portion arranged between the large end face portion and the small end face portion; wherein a surface of the large end face portion and/or the small end face portion has a film whose thickness gradually decreases from a center to an edge; and the thickness and position of the film satisfy: dx =-0.0002y⁴+2×10⁻¹⁵y³-0.0358y²-8×10⁻¹³y+8.8453, where x is the absolute thickness of the film, and y is a distance from a center to an edge.

Further, in the above light cone with high-uniformity and high-transmittance, a value of x is greater than 0, and a value of y is in a range from 0 to 11.5.

Further, in the above light cone with high-uniformity and high-transmittance, the light cone is a linear function type light cone, a quadratic function type light cone or a cubic function type light cone.

Further, in the above light cone with high-uniformity and high-transmittance, the film includes a homogenizing film layer, and a center of the homogenizing film layer is provided with a film layer center.

The objective of the present application and solving of the technical problem may also be implemented through the following technical solution. A method for preparing a light cone with high-uniformity and high-transmittance provided by the present application includes the following steps:
preparing a tapered region profile structure; and
preparing a homogenizing film on a surface of the light cone.

Further, in the above method for preparing the light cone with high-uniformity and high-transmittance, preparing the tapered region profile structure includes the following steps:
preparing a linear function type light cone, a quadratic function type light cone or a cubic function type light cone respectively according to a structure profile curve of a linear function distribution, a quadratic function distribution or a cubic function distribution.

Further, in the above method for preparing the light cone with high-uniformity and high-transmittance, preparing the homogenizing film on the surface of the light cone includes the following steps:
coating a film with a thickness gradually decreasing from a center to an edge on the surface of the light cone.

Further, in the above method for preparing the light cone with high-uniformity and high-transmittance, the film includes a homogenizing film layer, and a center of the homogenizing film layer is provided with a film layer center.

Further, in the above method for preparing the light cone with high-uniformity and high-transmittance, a rotation speed for coating the film is in a range from 10 rpm to 15 rpm.

Further, in the above method for preparing the light cone with high-uniformity and high-transmittance, a pressure intensity for coating the film ranges from 0.8 Pa to 1.0 Pa.

Further, in the above method for preparing the light cone with high-uniformity and high-transmittance, a vacuum degree for coating the film is less than or equal to 2×10⁻⁴ Pa.

Further, in the above method for preparing the light cone with high-uniformity and high-transmittance, during coating the film, argon and oxygen each have a gas flow ranging from 20 sccm to 30 sccm, and a volume ratio of argon to oxygen is 1: 1.

Further, in the above method for preparing the light cone with high-uniformity and high-transmittance, coating the film is achieved by sputtering; and pre-sputtering is started with power ranging from 30 W to 50 W, and then formal sputtering is started by adjusting the power to a range from 60 W to 80 W after pre-sputtering ranging from 3 minutes to 5 minutes, and formal sputtering time is in a range from 5 seconds to 300 seconds.

The objective of the present application and solving of the technical problem may also be implemented through the following technical solution. The present application provides a charge-coupled device, including the above high-uniformity and high-transmittance light cone.

The objective of the present application and solving of the technical problem may also be implemented through the following technical solution. The present application provides an image intensifier, including the above high-uniformity and high-transmittance light cone.

The objective of the present application and solving of the technical problem may also be implemented through the following technical solution. The present application provides a photomultiplier tube, including the above high-uniformity and high-transmittance light cone.

By means of the above technical solutions, the light cone with high-uniformity and high-transmittance, and the preparation method and application thereof in the present application at least have the following advantages.

The present application is intended to solve the problem of non-uniform light transmittance at an emitting end face of the light cone, a design is made for a tapered region profile structure and a surface microstructure of the light cone, the vignetting defect is overcome to a great extent, non-uniformity of the transmittance is effectively relieved, light emitted by the light cone is uniform, and a brightness difference between a periphery and a center region of the light cone is reduced.

The present application optimizes a light cone drawing shape according to change of the tapered region profile structure and transmittance of the light cone and designs a light cone tapered region profile curve in a cubic function shape, thereby greatly overcoming the vignetting defect; meanwhile, coating the homogenizing film on the surface of the light cone is also an effective method for overcoming the vignetting defect, and the film whose thickness gradually decreases from the center to the edge is prepared by using a mechanical rotary light cone film-coating device and a spiral mask designed according to non-uniform transmittance of the light cone, so that non-uniformity of the transmittance of the light cone is fully relieved; and by combining the both, the high-uniformity and high-transmittance light cone may be prepared, so that coupling efficiency of the light cone and a photoelectrical coupling device is effectively improved.

According to the light cone prepared by the present application, non-uniform transmittance in a wavelength of 550 nm may be up to a range from 1.78% to 2.43%, transmittance uniformity is up to a range from 97.57% to 98.22%, and transmittance in the center may be up to a range from 23% to 40%.

The above description is merely brief explanation for the technical solutions of the present application. For more clearly understanding the technical means of the present application and implementing according to contents of the specification, the detailed description is made below through the preferred embodiments of the present application.

### BRIEF DESCRIPTION OF THE DRAWINGS

FIG 1A is a diagram of a profile curve of a linear function distribution of an optical fiber of a light cone tapered region in the present application.
FIG 1B is a diagram of a profile curve of a quadratic function distribution of an optical fiber of a light cone tapered region in the present application.
FIG 1C is a diagram of a profile curve of a cubic function distribution of an optical fiber of a light cone tapered region in the present application.
FIG 2A is an optical fiber in periphery of a linear function type light cone in the present application.
FIG 2B is an optical fiber in periphery of a quadratic function type light cone in the present application.
FIG 2C is an optical fiber in periphery of a cubic function type light cone in the present application.
FIG 3 is a diagram of a spiral mask in the present application.
FIG 4 is a schematic whole structural diagram of a rotary light cone film-coating device in the present application.
FIG 5 is a schematic structural diagram of a rotary light cone film-coating device without a protective shell in the present application.
FIG 6 is a three-dimensional partial sectional view of a rotary light cone film-coating device in the present application.
FIG 6A is a schematic structural diagram of a rotary base of a rotary light cone film-coating device in the present application.
FIG 7A is a light cone diagram with a homogenizing film deposited on a large end face of a linear function type light cone in the present application.
FIG 7B is a light cone diagram with a homogenizing film deposited on a large end face of a quadratic function type light cone in the present application.
FIG 7C is a light cone diagram with a homogenizing film deposited on a large end face of a cubic function type light cone in the present application.
FIG 8A is a light cone diagram with a homogenizing film deposited on a small end face of a linear function type light cone in the present application.
FIG 8B is a light cone diagram with a homogenizing film deposited on a small end face of a quadratic function type light cone in the present application.
FIG 8C is a light cone diagram with a homogenizing film deposited on a small end face of a cubic function type light cone in the present application.
FIG 9A is a light cone diagram with homogenizing films plated on both end faces of a linear function type light cone in the present application.
FIG 9B is a light cone diagram with homogenizing films plated on both end faces of a quadratic function type light cone in the present application.
FIG 9C is a light cone diagram with homogenizing films plated on both end faces of a cubic function type light cone in the present application.
FIG 10 is a diagram of a test result of transmittance before and after coating a film in Embodiment 1 of the present application.
FIG 11 is a diagram of a test result of transmittance before and after coating a film in Embodiment 2 of the present application.
FIG 12 is a diagram of a test result of transmittance before and after coating a film in Embodiment 3 of the present application.
FIG 13 is a diagram of a test result of transmittance before and after coating a film in Embodiment 4 of the present application.
FIG 14 is a diagram of a test result of transmittance before and after coating a film in Embodiment 5 of the present application.
FIG 15 is a diagram of a test result of transmittance before and after coating a film in Comparative example 1 of the present application.
FIG 16 is a diagram of a test result of transmittance before and after coating a film in Comparative example 2 of the present application.

1, protective shell; 2, motor; 3, pinion; 4, big gear; 5, rotary base; 6, mask; 7, sample compartment; 8, platform; 9, sample; 10, homogenizing film layer; 11, large end; 12, small end; 13, linear function type light cone; 14, quadratic function type light cone; 15, cubic function type light cone; 16, film layer center; 20, homogenizing film layer; 21, large end face portion; 22, small end face portion; 26, film layer center; 31, large end face portion; 32, small end face portion; 36, film layer center; 46, film layer center; 56, film layer center; and 66, film layer center.

### DETAILED DESCRIPTION

In order to further describe the technical means adopted by the present application for achieving the expected application objectives, and effects, specific implementations, features and effects of a light cone with high-uniformity and high-transmittance, and a preparation method and application thereof provided according to the present application are described below in detail with reference to the accompanying drawings and preferred embodiments. In the following description, different "an embodiment" or "embodiment" does not necessarily refer to the same embodiment. Besides, specific features or characteristics in one or more embodiments may be combined in any appropriate manner.

Unless otherwise defined, all technical and scientific terms used herein have the same meanings as usually understood by those skilled in the art belonging to the present application. The terms used herein are merely for the purpose of describing the specific embodiments instead of intending to limit the present application. Terms "include" and "have" and any of their variants in the specification, claims and the brief description of the accompanying drawings in the present application intend to cover non-exclusive inclusion.

In the description of the embodiments of the present application, technical terms such as "first" and "second" are only used for distinguishing different objects instead of being understood as indicating or implying a relative significance or implicitly indicating the quantity, specific order or primary and secondary relation of the referred technical features. In the description of the embodiments of the present application, "a plurality of" means two or more than two unless otherwise limited specifically clearly.

Mentioning "embodiment" herein means that specific features, structures or characteristics described with reference to the embodiments may be included in at least one embodiment of the present application. This phrase occurring in each position of the description does not necessarily refer to the same embodiment, nor independent or alternative embodiment mutually exclusive to another embodiment. Those skilled in the art explicitly or implicitly understand that embodiments described herein may be combined with other embodiments.

In the description of the embodiments of the present application, a term "and/or" only describes an association relationship between associated objects and represents that there may be three relationships, for example, A and/or B, which represents that merely A exists, both A and B exist, and merely B exists. **In** addition, a character "/" herein generally represents an "or" relationship between associated objects in front of and behind the character.

**In** the description of the embodiments of the present application, a term "a plurality of" refers to two or more than two. Likewise, "a plurality of groups" refers to two groups or more than two groups, and "a plurality of pieces" refers to two pieces or more than two pieces.

**In** the description of the embodiments of the present application, directions or position relations indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial" and "circumferential" are directions or position relations as shown in the accompanying drawings and are only intended to conveniently describe the embodiments of the present application and simplify the description but not to indicate or imply that a referred to apparatus or element necessarily has a specific direction or is constructed or operated in a specific direction, so as not to be understood as a limitation on the embodiments of the present application.

**In** the description of the embodiments of the present application, unless otherwise specified and limited clearly, technical terms such as "mount", "connect" and "connection" and "fix" are to be understood in a broad sense, for example, it may be a fixed connection, a detachable connection or integrated; it may also be a mechanical connection or an electrical connection; and it may be a direct connection, an indirect connection through an intermediate medium, internal communication between two elements or an interaction relation between two elements. Specific meanings of the above terms in the embodiments of the present application may be understood by those ordinarily skilled in the art according to specific conditions.

### 1. Design and preparation of a tapered region profile structure of a light cone

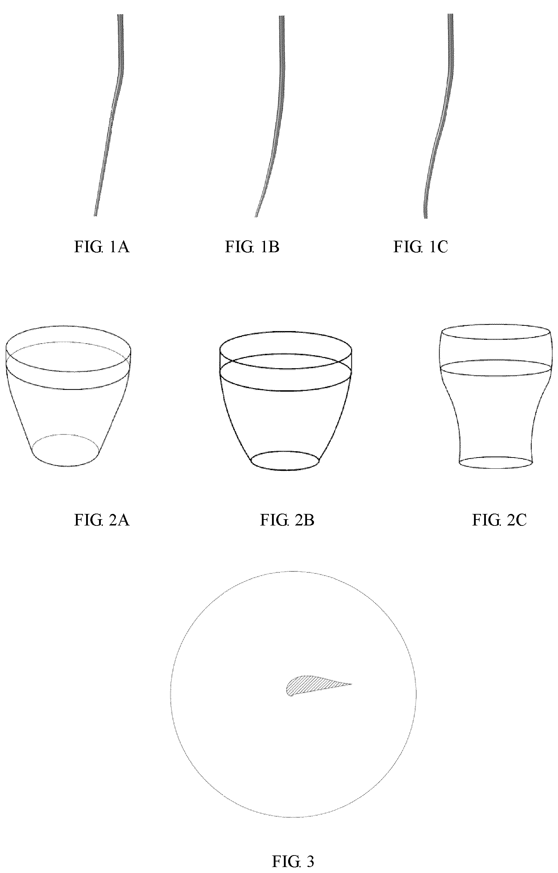

During a drawing process of the light cone, an optical fiber in an edge region and an optical fiber in a center region are different in deformation degree, which results in that light transmission capacities are different, so different light transmission effects may occur by changing a tapered region profile of the light cone. According to properties of thermodynamics and material mechanics during a drawing process of a conical optical fiber array, an optical fiber trajectory in a light cone tapered region and light-transmission uniformity (change of the optical fiber trajectory may affect a light-transmission property during a heating drawing process of the optical fiber) are optimized, the tapered region is designed as structure profile curves of a linear function distribution, a quadratic function distribution and a cubic function distribution, as shown in FIG 1A, FIG 1B and FIG 1C, and light cones corresponding to the three types of functions are called a linear function type light cone, a quadratic function type light cone and a cubic function type light cone, as shown in FIG 2A, FIG 2B and FIG 2C. It can be shown according to theory and transmittance tests that compared with the tapered region profile curve being the linear function distribution or the quadratic function distribution, a value of the vignetting defect in the cubic function distribution is the minimum and may reach 2.21%, so the vignetting defect is effectively overcome, and the light cone with the high transmittance is achieved.

"Center" refers to a true center position of the light cone; and "edge" refers to an edge position of an effective area of the light cone, namely, an optical fiber on the outermost layer of the light cone.

A light cone with a height being 45 mm and a diameter being 24 mm is taken as an example.

### Linear function type light cone:

Two ends of a light cone workblank are fixed onto a drawing rod through a drawing fixture, and then a drawing furnace is controlled by a mechanical operation panel to make a center of the light cone workblank coaxial with a center of an internal drawing furnace, so preparation work is completed. First, an external furnace is heated to a preheating temperature, the preheating temperature of the external furnace is set to a range from 500°C to 550°C, and if the preheating temperature is lower than 500°C, a temperature difference between the external furnace and the internal furnace is large, and a preliminary linear function type light cone is not easy to draw. If the preheating temperature is higher than 550°C, too high temperature may cause components inside the light cone to change. After the temperature of the external furnace is stabilized for no less than 15 minutes (in view of full preheating), the temperature of the internal furnace of the drawing furnace starts to increase by using a heating ring with an internal diameter being 60 mm and a width being 11 mm (functioning as heating a middle portion of the light cone workblank to a softening temperature) till the temperature reaches a light cone softening point temperature, two drawing forces constant in numerical value but opposite in direction (a magnitude of the drawing force is adjusted according to different function forms of light cones) are applied outwards in a direction perpendicular to a light cone end face through a servo motor and a drawing force sensor, and a center portion of the light cone workblank in a heating region of the internal furnace is gradually softened and slowly drawn towards two sides under an action of the drawing force till a shape of a "dumbbell" with a thin middle and two size-unchanged ends is obtained. When the light cone workblank is drawn to a target cone ratio, heating of the internal furnace stops, an external furnace annealing procedure is started, finally the temperature decreases to a room temperature and then the light cone workblank is taken out. At the moment, a temperature difference between the internal furnace and the external furnace is only in a range from 280°C to 330°C (a linear-function-curve-form light cone cannot be drawn if the temperature difference is lower than a lower limit value or higher than an upper limit value), a change tendency of the drawn light cone conical face is linear change, a light cone deformation region infinitely approaches a linear-function straight line shape, and a corresponding equation type is *y*=*ax,* where a>0.5, and if a is less than 0.5, the optical fiber light cone cannot be drawn. The greater the value of a is, the smaller the cone ratio is till the cone ratio reaches 1: 1. For example, when the cone ratio is fixed to be 2:1, the drawing force is fixed to be 500 N, and time for applying the drawing force is 150 minutes, an external profile curve of the light cone is in a linear-function straight line shape, which corresponds to an equation y=3.75x.

Starting the external furnace annealing procedure includes: closing a heating procedure on the mechanical operation panel, and a cooling speed ranges from 5°C/min to 10°C/min. If no cooling procedure is set and it depends on natural cooling, the cooling speed may be greater than 10°C/min, which has an adverse effect on service life of the furnace.

### Quadratic function type light cone:

A drawing method is the same as drawing of the linear function type light cone, a difference lies in that a temperature of an external furnace of the quadratic function type light cone ranges from 500°C to 550°C, which is 40°C to 60°C lower than the temperature of the external furnace of the linear function type light cone, a heating ring has an internal diameter of 50 mm and a width of 8 mm, a difference between the temperature of the external furnace and the temperature of the internal furnace is increased, so a gradient temperature zone of a whole combustion chamber is greater, a change tendency of a drawn light cone conical face is non-linear change, in this case, a light cone deformation region shows a quadratic-function parabolic shape, and a corresponding equation type is *y=ax²,* where a>0.25, and if a is less than 0.25, the light cone cannot be drawn. The greater the value of a is, the smaller the cone ratio is till the cone ratio reaches 1:1. For example, when the cone ratio is fixed to be 2:1, the drawing force is fixed to be 500 N, and time for applying the drawing force is 130 minutes, an external profile curve of the light cone is in a quadratic-function shape, which corresponds to an equation y=0.625x².

### Cubic function type light cone:

A drawing method is the same as drawing of the quadratic function type light cone, and a difference lies in that the heating ring in the furnace is replaced by a widened heating ring with an internal diameter being 50 mm and a width being 16 mm for the cubic function type light cone. The width of the heating ring is increased so as to increase a heated region in a middle portion of the light cone workblank, the middle portion of the light cone workblank may remain a straight region in a long range during a drawing process, and a light cone deformation region in a cubic-function double parabolic shape is presented. A corresponding equation type is *y=ax³,* where a>0.125, and if a is less than 0.125, the light cone cannot be drawn. There is no upper limit, and the greater the value of a is, the smaller the cone ratio is till the cone ratio reaches 1:1. For example, when the cone ratio is fixed to be 2:1, the drawing force is fixed to be 500 N, and time for applying the drawing force is 110 minutes, an external profile curve of the light cone is in a cubic-function shape, which corresponds to an equation y=0.104x³.

### 2. Design and preparation of a homogenizing film on a surface of the light cone

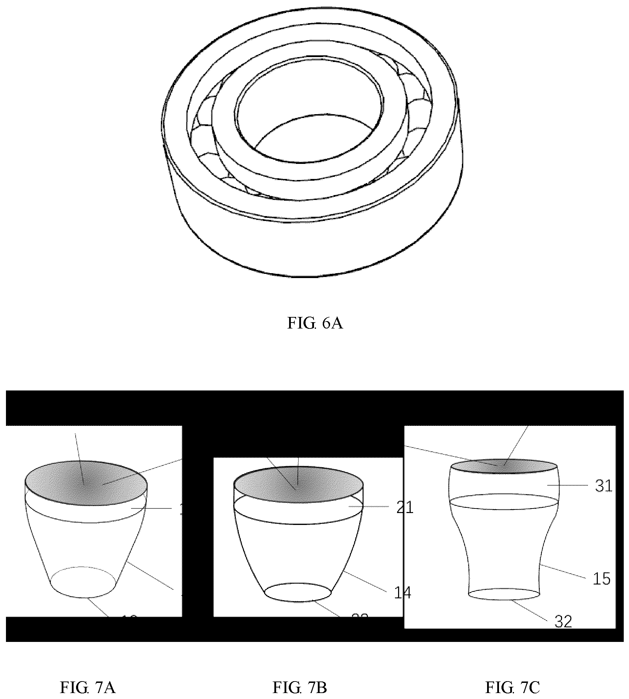

If a conventional method (neither a rotary film-coating device nor a mask is used) is adopted for coating the film with the consistent thickness on the surface of the light cone, only the whole transmittance of the light cone can be changed, but the vignetting defect of the light cone cannot be overcome, and the high-uniformity and high-transmittance effect cannot be achieved, so a film whose thickness gradually decreases from a center to an edge is designed regarding the non-uniform transmittance characteristic of the light cone (namely, the transmittance of a center region is high, and the transmittance of an edge region is low), as shown in FIG 7. The spiral mask is shown in FIG. 3, and a shadow portion is a hollowed-out portion in a shape designed according to the non-uniform transmittance of the light cone. A transmittance tester is used first (namely, a device for detecting visible light transmittance and uniformity of a fiber optic image transmission element involved in a patent application with publication number CN 111442908A) for obtaining a transmittance distribution of the light cone, then a function relationship between the light cone transmittance and a small end face position is obtained according to the obtained data fitting, a film thickness and a position of the needed plated film are obtained by calculating through a function, and the function is: dx =-0.0002y⁴+2× 10⁻¹⁵y³-0.0358y²-8× 10⁻¹³y+8.8453, where, x is a thickness of a film layer, y is a distance from a center to an edge (a value of x is greater than 0, and a value of y is in a range from 0 to 11.5), and finally a shape of the spiral mask is obtained according to a formula *θ*(*x*)*=θ*₀*d*(*x*)/*d*₀ and ρ= (1 - d/H)r. *Θ(x)*(*x*) is an angle at which it is exposed to a steam flow, *d*₀ is a thickness at a center of the film layer, *θ*₀ is an opening angle at a center of the film layer, a distance between an evaporation source and lower surface of a plated substrate is H, a distance between a shielding plate and the lower surface of the substrate is d, a polar diameter from a center of the shielding plate to a reference point of an opening is ρ, and a maximum radius of a glass substrate that the evaporation source can reach is r. As shown in FIG 3, a size of the opening of the shape of the spiral mask is in a tendency of gradually decreasing from a center to an edge, the rotary light cone film-coating device cooperates, during a coating process, exposure time of the middle region is long, exposure time of the edge region is short, and then a target film layer may be obtained.

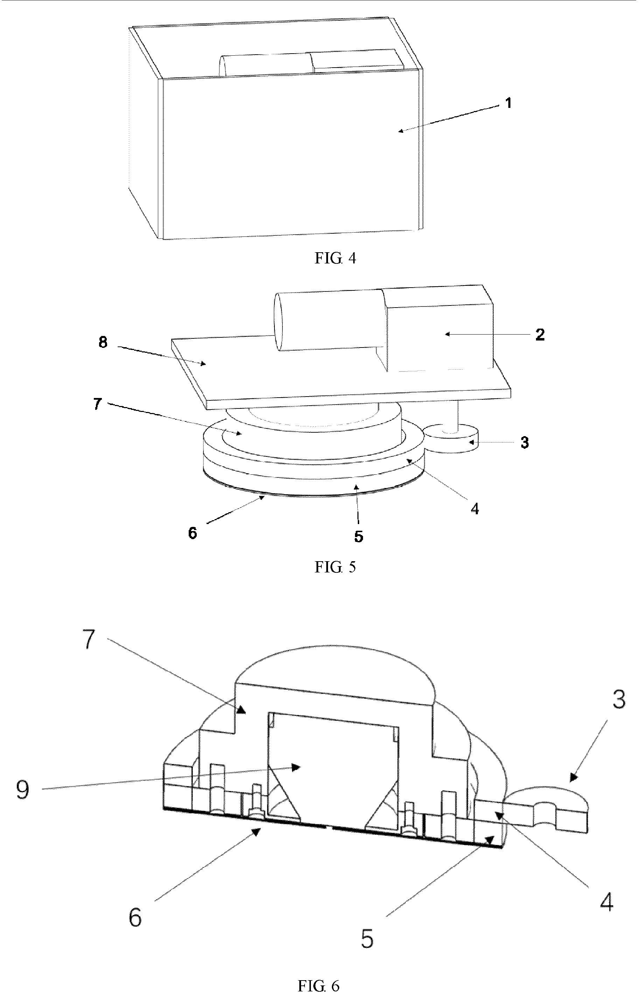

The above rotary light cone film-coating device is shown in FIGS. 4 to 6, including a protective shell 1, a motor 2, a pinion 3, a big gear 4, a rotary base 5, a mask 6, a sample compartment 7, a platform 8 and a sample 9 fixed through a screw. The protective shell 1 is fixedly connected with the platform 8, so the whole device is in a regular shape (which is a cuboid with a length being 173 mm, a width being 136 mm and a height being 115 mm), which is convenient to place in a cavity. The platform 8 is a rectangular metal plate with a thickness being 3 mm, so that a size can be reduced as much as possible on the premise of guaranteeing that parts such as a motor and the sample compartment can bear. As shown in FIG 6A, the rotary base 5 is a bearing structure composed of two concentric annuluses, including a non-rotating internal structure and a rotating external structure which are connected through steel balls, the internal structure is fixed to the sample compartment 7, an upper end face of the external structure is fixed to the big gear 4, a lower end face of the external structure is fixed to the mask 6, and thus the mask can rotate but the sample compartment does not rotate. Specifically, the rotary base 5 is a high-precision bearing, a gap inside the bearing is quite small, the interior of the bearing is filled with steel balls, stability is high without shaking, and thus high coaxiality is guaranteed. As the rotary base 5 is of a three-dimensional structure and located between the sample compartment 7 and the mask 6, so if the high-stability and high-coaxiality mechanical rotary light cone film-coating device is put on film-coating equipment, the sample compartment 7 is fixed to an upper portion of an interior of the rotary base 5, and the mask 6 is fixed to a lower portion of an exterior of the rotary base 5. The sample 9 is a light cone with no requirement for a size and properties, and light cones in different sizes may be put in by changing a size of the sample compartment. The rotary base 5 is fixed to the mask 6, the motor 2 drives the rotary base 5 to rotate, and the sample compartment 7 keeps still, so that an effect of making the mask 6 self-rotate can be achieved. The film whose thickness gradually decreases from the center to the edge may be plated through the rotary light cone film-coating device and the spiral mask, and by cooperation of the non-uniform transmittance light cone, the light cone with high-uniformity and high-transmittance is obtained finally.

The sample 9 is put in the sample compartment 7, the sample compartment 7 is 4 mm higher than the sample, and a rubber pad is arranged in the sample compartment, so an end face of the sample 9 is prevented from being damaged when the rotary light cone film-coating device is inverted and dismounted. Specifically, the rubber pad is located between the large end face of the light cone and the sample compartment 7, in this way, the large end face of the light cone may be prevented from making direct contact with the sample compartment 7. The sample compartment 7 is made of polytetrafluoroethylene, why polytetrafluoroethylene is selected is that first, the polytetrafluoroethylene is low in weight and a whole weight of the device can be reduced; and second, the polytetrafluoroethylene can bear a higher temperature than common plastics. An upper end face of the sample compartment 7 is fixed to the platform 8 through screws, and a lower end face of the sample compartment is fixed to an upper end face of the internal structure of the rotary base 5 through screws. The sample compartment 7 is a cylindrical tank with a diameter being 48 mm and a depth 45 mm. One end of the platform 8 is fixed to the motor 2 through a screw so that the film-coating effect is guaranteed without interfering with rotation of the mask.

The pinion 3 with a small diameter is mounted at a tail end of a shaft of the motor 2, the motor 2 rotates to drive the pinion 3 to rotate, in this way, the film-coating effect is guaranteed without interfering with rotation of the mask.

The pinion 3 is engaged with the large-diameter and hollow big gear 4, and the pinion 3 rotates to drive the big gear 4 to rotate. During specific implementation, a diameter of the big gear 4 needs to be equal to an external diameter of the bearing. Given that the sample compartment 7 needs to be put in a middle of the big bear 4, the big gear 4 is arranged to be hollow. The diameter of the big gear 4 is consistent with a size of the rotary base, a ratio of a rotating speed of the pinion 3 to a rotating speed of the big gear 4 is 5: 1, and uniformity of a formed film is good in this rotating speed ratio. The pinion 3 with the appropriate diameter is selected according to the rotating speed ratio, and too high or too low rotating speed is prone to causing poor uniformity of the formed film and a stain on a surface of the film layer. A design of the rotating speed ratio between the pinion and the big gear is intended to control a rotating speed of the bottom mask, and uniformity of the thickness of film coating is improved. With reference to a position of the pinion and the rotating speed ratio, the diameter of the pinion 3 is designed as 3 cm after comprehensive consideration. Meanwhile, the high-stability and high-coaxiality mechanical rotary light cone film-coating device may be driven in a limited space by using the big gear and the pinion, so drive efficiency is high.

The motor 2 drives the pinion 3 to rotate, the pinion 3 drives the big gear 4 to rotate, the big gear 4 drives an exterior of the bearing to rotate, the exterior of the bearing drives the mask to rotate, and thus the sample does not rotate but the mask self-rotates.

The big gear 4 is fixed to an upper end of exterior of the rotary base 5 through a screw, the big gear 4 rotates to drive the rotary base 5 to rotate, an interval of 2 mm is reserved between the big gear 4 and the sample compartment 7, so the big gear 4 is not affected by the sample compartment 7 while rotating.

A lower end face of the exterior of the rotary base 5 is fixed to the mask 6 through a screw, the exterior of the rotary base 5 drives the mask 6 to rotate, a size of the mask 6 is equal to a size of the exterior of the rotary base 5, a gap between the mask and the exterior of the rotary base 5 is 2 mm, and thus the film coating effect is guaranteed while rotation of the mask 6 is without interference. Specifically, the mask 6 is a spiral copper plate with a middle being hollowed-out and has a thickness of 0.5 mm and a diameter of 200 mm. An opening of a hollowed-out middle portion of the spiral copper plate is large, an opening of an edge portion thereof is small, namely, during film coating, the middle is exposed for longer time, an edge is exposed for shorter time, and thus a gradient film with a middle film layer being thick and an edge film layer being thin may be obtained. On the premise of ensuring that the mask does not deform, the thinner the copper plate is, the better, so a sputtering material may be better attached to a sample; and it is shown from a test that the mask with a thickness being less than 0.5 mm is prone to deforming. Given that the mask 6 is fixed to the rotary base through the screw, so a diameter of the mask 6 is the same as the size of the exterior of the rotary base for the purpose of convenient fixing.

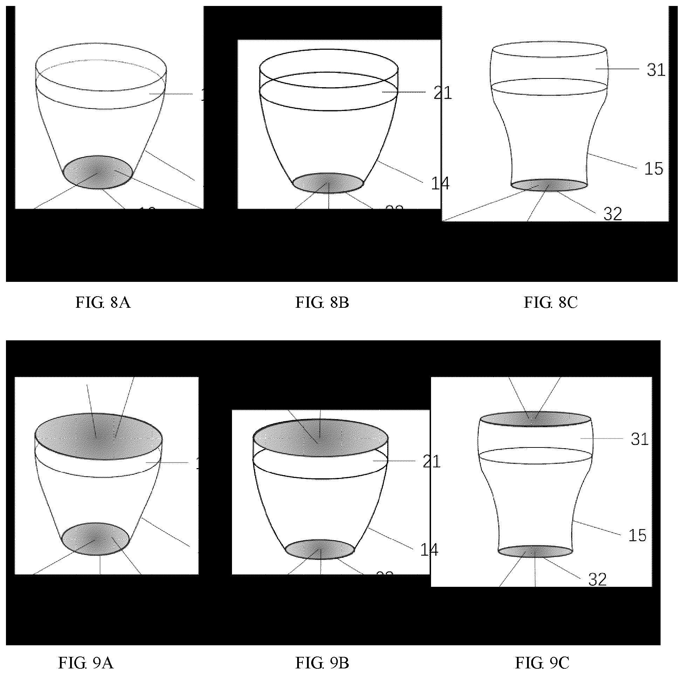

Coating the film with a thickness gradually decreasing from a center to an edge on the surface of the light cone includes the following steps.
1) The mounted rotary light cone film-coating device is put in a cavity of a magnetron sputtering machine; a sealing property of the cavity is good, and the cavity may be used for placing a to-be-plated sample or a device; and the sample cannot be mounted if the mask is mounted first, so if the device needs to be used, the sample has to be mounted first and then the mask is mounted.
2) A motor is powered on, and a rotation speed of the rotary light cone film-coating device is adjusted; and as the rotation speed of the motor of the rotary light cone film-coating device is adjustable, the rotation speed of the motor may be adjusted to a range from 10 rpm to 15 rpm by rotating a button.
3) The cavity is closed and film coating is started. Closing the cavity and starting film coating may specifically include the following steps.
   a: The cavity of the film coating device is closed, then a mechanical pump is started for pre-vacuumizing, and when a vacuum degree is less than or equal to 10 Pa, the mechanical pump is shut down, an electromagnetic valve is opened, and a molecular pump is started.
   b: When the vacuum degree is less than or equal to 2×10⁻⁴ Pa, a gas flow meter is started, a gas flow of argon and a gas flow of oxygen are adjusted to a range from 20 sccm to 30 sccm, and then a pressure intensity in the cavity is adjusted to a range from 0.8 Pa to 1.0 Pa through a valve G; if the vacuum degree is less than or equal to 2×10⁻⁴ Pa, a demand for film coating may be met, and the lower the vacuum degree is, the fewer impurities in the cavity are; and the lower the pressure intensity, namely a working pressure intensity in the cavity is, the higher the quality of a plated film layer is, but the lower the speed is, so the working pressure intensity is selected to a range from 0.8 Pa to 1.0 Pa.
   c: A sputtering power switch is turned on, power is adjusted to a range from 30 W to 50 W for starting pre-sputtering, pre-sputtering is performed for 3 minutes to 5 minutes, then a baffle valve is opened, formal sputtering is started by adjusting the power to a range from 60 W to 80 W after pre-sputtering ranging from 3 minutes to 5 minutes, and formal sputtering time is in a range from 5 seconds to 300 seconds; and pre-sputtering first functions as preheating a machine, for no high power is suitable when the machine is just started, and second functions as sputtering away impurities on a surface of a target material.
   d: After sputtering is completed, the baffle valve is closed, the power switch is turned off, the gas flow meter is switched to 0 through a rotary knob, the electromagnetic valve is closed, the molecular pump is shut down, and a valve connected with air is opened for balancing atmosphere pressure intensities inside and outside the cavity.
   e: The cavity of the film coating device is opened, the rotary light cone film-coating device is taken out, film coating is finished, and then the light cone with high-uniformity and high-transmittance is obtained, as shown in FIG 7A, FIG 7B, FIG 7C, FIG 8A, FIG 8B, FIG 8C, FIG 9A, FIG 9B and FIG 9C, and the light cone may be applied in a charge-coupled device (CCD), an image intensifier or a photomultiplier tube. There are three types of light cones, namely, a linear function type light cone 13, a quadratic function type light cone 14 and a cubic function type light cone 15. It can be shown from FIG. 7A, FIG 7B, FIG. 7C, FIG 8A, FIG 8B, FIG 8C, FIG 9A, FIG 9B and FIG 9C that a large end face and a small end face of each of the three different function forms of light cones may be plated with the homogenizing film layer, or even the two ends may be plated with the homogenizing film layer at the same time, and there are a total of nine film coating manners. Specifically, as shown in FIG 7A, FIG 8A and FIG 9A, the linear function type light cone 13 includes a large end face portion 11, a small end face portion 12 and an optical fiber portion arranged between the large end face portion 11 and the small end face portion 12; a surface of the large end face portion 11 and/or the small end face portion 12 has a film whose thickness gradually decreases from a center to an edge, the film includes a homogenizing film layer 10 and/or a homogenizing film layer 20, a film layer center 16 is arranged in a center of the homogenizing film layer 10, and a film layer center 46 is arranged in a center of the homogenizing film layer 20. A thickness and a position of the film satisfy: dx =-0.0002y⁴+2×10⁻¹⁵y³-0.0358y²-8×10⁻¹³y+8.8453, where x is the absolute thickness of the film, and y is a distance from a center to an edge. As shown in FIG 7B, FIG 8B and FIG 9B, the quadratic function type light cone 14 includes a large end face portion 21, a small end face portion 22 and an optical fiber portion arranged between the large end face portion 21 and the small end face portion 22; a surface of the large end face portion 21 and/or the small end face portion 22 has a film whose thickness gradually decreases from a center to an edge, the film includes a homogenizing film layer 10 and/or a homogenizing film layer 20, a film layer center 26 is arranged in a center of the homogenizing film layer 10, and a film layer center 56 is arranged in a center of the homogenizing film layer 20. As shown in FIG 7C, FIG 8C, and FIG 9C, the cubic function type light cone 15 includes a large end face portion 31, a small end face portion 32 and an optical fiber portion arranged between the large end face portion 31 and the small end face portion 32; a surface of the large end face portion 31 and/or the small end face portion 32 has a film whose thickness gradually decreases from a center to an edge, the film includes a homogenizing film layer 10 and/or a homogenizing film layer 20, a film layer center 36 is arranged in a center of the homogenizing film layer 10, and a film layer center 66 is arranged in a center of the homogenizing film layer 20. A thickness and a position of the film satisfy: dx =-0.0002y⁴+2×10⁻¹⁵y³-0.0358y²-8×10⁻¹³y+8.8453, where x is the absolute thickness of the film, and y is a distance from a center to an edge.

The above "high-uniformity and high-transmittance" refers to that the light cone has transmittance uniformity in a range from 97.57% to 98.22% in a wavelength of 550 nm and center transmittance in a range from 23% to 40%.

The present application is described in detail below with reference to the specific embodiments.

"Center" mentioned below refers to a true center position of the light cone; and "edge" refers to an edge position of an effective area of the light cone, namely, an optical fiber on the outermost layer of the light cone.

### Embodiment 1:

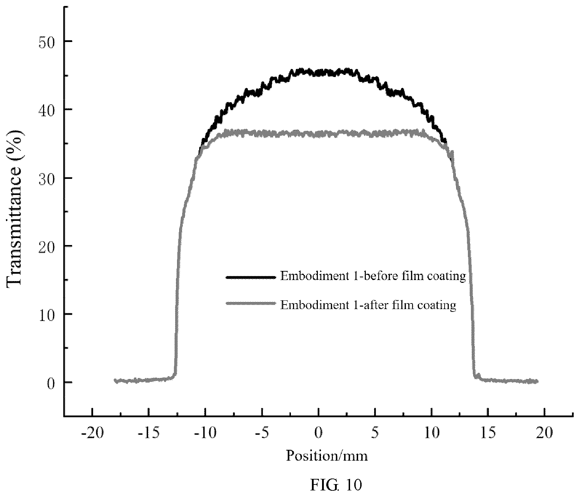

This embodiment provides a linear function type light cone, which is fabricated specifically through the following steps:
S1, a high-refractive-index glass rod and a low-refractive-index glass tube are combined by using a rod-tube and then drawn into monofilament each having a filament diameter of 3 mm in 1850°C; the drawn monofilaments and light absorbing filaments (each have a filament diameter of 3 mm) for absorbing stray light are arranged to form a hexagon and then drawn into primary multifilaments each having a filament diameter of 1.3 mm in 1845°C; the primary multifilaments are arranged to form a hexagon once and then drawn into secondary multifilaments each having a filament diameter of 2 mm in 1845°C; and the secondary multifilaments are put in a melting-pressing mill and a high temperature and a high pressure are applied (the temperature is 650°C and the pressure is 15 tons) to obtain a blank flat which has a diameter of 26 mm and a height of 50 mm. The glass rod has a refractive index of 1.78 in a wavelength of 550 nm and is composed of, by weight percent: SiO₂ 54.12%; K₂CO₃ 14.84%; Na₂CO₃ 11.10%; Al(OH)₃ 5.99%; H₂BO₃ 10.16%; CaCO₃ 2.88%; BaCO₃ 0.23%; CeO₂ 0.07%; MgCO₃ 0.46%; NiO 0.01%; Nb₂O₅ 0.05%; Y₂O₃ 0.01%; and La₂O₃ 0.08%. The glass tube has a refractive index of 1.49 in a wavelength of 550 nm and is composed of, by weight percent: SiO₂ 35.25%; KNO₃ 0.13%; Na₂CO₃ 0.10%; Al(OH)₃ 0.84%; H₂BO₃ 24.23%; CaCO₃ 10.26%; BaCO₃ 25.50%; MgCO₃ 0.21%; La₂O₃ 1.68; Sb₂O₃ 0.06%; and TiO₂ 1.74%. The light absorbing filament is composed of, by weight percent: SiO₂ 55.84%; K₂CO₃ 11.27%; Na₂CO₃ 6.11%; Al(OH)₃ 9.37%; H₂BO₃ 8.56%; CaCO₃ 2.67%; BaCO₃ 0.03%; CeO₂ 0.19%; MgCO₃ 0.40%; Fe₂O₃ 0.02%; NiO 0.87%; MnO₂ 2.87%; CoO 0.42%; La₂O₃ 0.01%; and V₂O₅ 1.37%.
S2, two ends of a light cone blank with a diameter being 26 mm and a height being 50 mm are fixed to a drawing rod through a drawing fixture, then a drawing furnace is controlled through a mechanical operation panel to make a center of the light cone blank coaxial with a center of an internal drawing furnace, so preparation work is completed; first, an external furnace is heated to a preheating temperature of 550°C, the temperature of the external furnace is stabilized for 15 minutes, then a temperature of the internal furnace of the drawing furnace starts to increase at a rate of 10°C/min by using a heating ring with an internal diameter being 60 mm and a width being 11 mm till the temperature reaches a light cone softening point temperature of 800°C, two drawing forces of 500 N constant in numerical value but opposite in direction are applied outwards in a direction perpendicular to a light cone end face through a servo motor and a drawing force sensor, and a center portion of the light cone workblank in a heating region of the internal furnace is gradually softened and drawn towards two sides under an action of the drawing force till a shape of a "dumbbell" with a thin middle and two size-unchanged ends is obtained. When the light cone workblank is drawn to a target cone ratio of 2:1, heating of the internal furnace stops, an external furnace annealing procedure is started for cooling at a rate of 10°C/min, finally the temperature decreases to a room temperature and then the light cone workblank is taken out. At this moment, a temperature difference between the internal furnace and the external furnace is only 300°C, a change tendency of a drawn light cone conical face is linear change, a light cone deformation region infinitely approaches a linear-function straight line shape, a corresponding equation type is y=4.55x, a fixed cone ratio is 2:1, the drawing force is fixed to be 500 N, and a profile curve of the exterior of the light cone is in a linear-function straight line shape when the drawing force is applied for 150 minutes.
S3, the large end face and the small end face of the drawn light cone blank are polished for 2 h, and a performance test is performed after roughness reaches 20 nm level, so it is guaranteed that transmittance, resolution and internal defect of the light cone meet the national standards.
S4, a difference between transmittance at an axial center 0 and transmittance at a boundary of an effective region (D=25.00 mm) is used for representing non-uniform transmittance (vignetting defect) in a conical optical fiber array, after obtaining data analysis by using a transmittance tester (namely, a device for detecting visible light transmittance and uniformity of a fiber optic image transmission element involved in a patent application with a publication number of CN111442908A), the vignetting defect is 10.55%, and the center transmittance is 45%. Afterwards, a layer of gradient metal chromium film with a center thickness being 6 nm and an edge thickness being 1 nm is plated on the small end face of the light cone by using the rotary light cone film-coating device, the vignetting defect is reduced to 2.15%, the center transmittance is 36%, and a test result is shown in FIG 10.

Specifically, the mounted rotary light cone film-coating device is put in the cavity of the magnetron sputtering machine, the motor is powered on, and the rotation speed of the rotary light cone film-coating device is adjusted to 10 rpm; and the cavity is closed and film coating is started, and a distance between the mask and the light cone is 1 mm.

Closing the cavity and starting film coating specifically include the following steps: a, the cavity of the film coating device is closed, then a mechanical pump is started for pre-vacuumizing, and when a vacuum degree is 10 Pa, the mechanical pump is shut down, the electromagnetic valve is opened, and the molecular pump is started; b, when the vacuum degree is 2×10⁻⁴ Pa, the gas flow meter is started, the gas flow of argon and the gas flow of oxygen are adjusted to 25 sccm (a volume ratio of argon to oxygen is 1:1), and then the pressure intensity in the cavity is adjusted to 0.8 Pa through the valve G; c, the sputtering power switch is turned on, pre-sputtering is started by adjusting the power to 50 W, pre-sputtering time is 5 minutes, then the baffle valve is opened, formal sputtering is started by adjusting the power to 60 W, and formal sputtering time is 60 seconds; d, after sputtering is completed, the baffle valve is closed, the power switch is turned off, the gas flow meter is switched to 0 through the rotary knob, the electromagnetic valve is closed, the molecular pump is shut down, and the valve connected with air is opened for balancing atmosphere pressure intensities inside and outside the cavity; and e, the cavity of the film coating device is opened, the rotary light cone film-coating device is taken out, film coating is finished, and then the light cone with high-uniformity and high-transmittance is obtained. The light cone may be applied in the charge-coupled device (CCD), the image intensifier or the photomultiplier tube.

It can be shown from FIG 10 that a thickness of the chromium film gradually decreases from a center to an edge, so it can be shown that the transmittance at the center of the light cone decreases from 45% to 36%, only the transmittance at the edge is less than 36%, other positions of the light cone remain the transmittance of about 36%, it is shown that a design of the mask is substantially reasonable, and the transmittance at the edge is less than 36%, for an opening at an edge of the mask is small and the film layer is not prone to depositing.

### Embodiment 2:

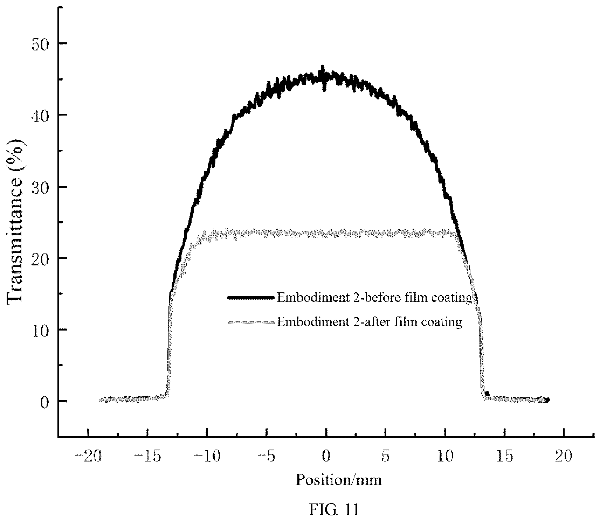

This embodiment provides a quadratic function type light cone, which is fabricated specifically through the following steps:
S1, which is the same as Embodiment 1.
S2, a drawing method is the same as drawing of the linear function type light cone, a difference lies in that a temperature of an external furnace of the quadratic function type light cone is 550°C, a heating ring has an internal diameter of 50 mm and a width of 8 mm, a corresponding equation type is y=0.826x², a fixed cone ratio is 2:1, the drawing force is fixed to be 500 N, and a profile curve of the exterior of the light cone is in a quadratic-function shape when the drawing force is applied for 130 minutes.
S3, which is the same as Embodiment 1.
S4, after obtaining data analysis by using the transmittance tester (namely, the device for detecting visible light transmittance and uniformity of the fiber optic image transmission element involved in a patent application with a publication number of CN111442908A), the vignetting defect is 14.23%, and the center transmittance is 45%. Afterwards, a layer of gradient metal chromium film with a center thickness being 8 nm and an edge thickness being 1 nm is plated on the small end face by using the rotary light cone film-coating device, the vignetting defect is reduced to 2.43%, the center transmittance is 23%, and a test result is shown in FIG 11.

Specifically, the mounted rotary light cone film-coating device is put in the cavity of the magnetron sputtering machine, the motor is powered on, and the rotation speed of the rotary light cone film-coating device is adjusted to 10 rpm; and the cavity is closed and film coating is started, and a distance between the mask and the light cone is 1 mm.

Closing the cavity and starting film coating specifically include the following steps: a, the cavity of the film coating device is closed, then a mechanical pump is started for pre-vacuumizing, and when a vacuum degree is 10 Pa, the mechanical pump is shut down, the electromagnetic valve is opened, and the molecular pump is started; b, when the vacuum degree is 2×10⁻⁴ Pa, the gas flow meter is started, the gas flow of argon and the gas flow of oxygen are adjusted to 25 sccm (a volume ratio of argon to oxygen is 1:1), and then the pressure intensity in the cavity is adjusted to 0.8 Pa through the valve G; c, the sputtering power switch is turned on, pre-sputtering is started by adjusting the power to 50 W, pre-sputtering time is 5 minutes, then the baffle valve is opened, formal sputtering is started by adjusting the power to 60 W, and formal sputtering time is 80 seconds; d, after sputtering is completed, the baffle valve is closed, the power switch is turned off, the gas flow meter is switched to 0 through the rotary knob, the electromagnetic valve is closed, the molecular pump is shut down, and the valve connected with air is opened for balancing atmosphere pressure intensities inside and outside the cavity; and e, the cavity of the film coating device is opened, the rotary light cone film-coating device is taken out, film coating is finished, and then the light cone with high-uniformity and high-transmittance is obtained. The light cone may be applied in the charge-coupled device (CCD), the image intensifier or the photomultiplier tube.

It can be shown from FIG 11 that with the center transmittance of the quadratic function type light cone decreasing from 45% to 23%, the vignetting defect decreases from 14.23% to 2.43%.

### Embodiment 3:

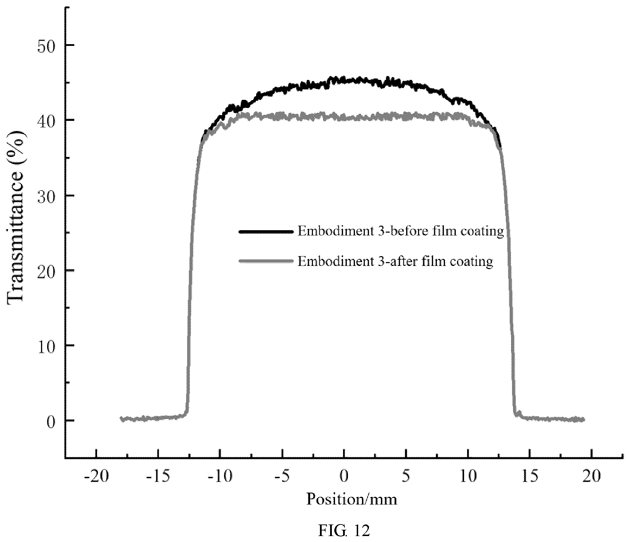

This embodiment provides a cubic function type light cone, which is fabricated specifically through the following steps:
S1, which is the same as Embodiment 1.
S2, a drawing method is the same as drawing of the quadratic function type light cone, and a difference lies in that the heating ring in the furnace is replaced by a widened heating ring with an internal diameter being 50 mm and a width being 16 mm for the cubic function type light cone. A corresponding equation type is y=0.15x³, a fixed cone ratio is 2:1, the drawing force is fixed to be 500 N, and a profile curve of the exterior of the light cone is in a cubic-function shape when the drawing force is applied for 110 minutes.
S3, which is the same as Embodiment 1.
S4, after obtaining data analysis by using the transmittance tester (namely, the device for detecting visible light transmittance and uniformity of the fiber optic image transmission element involved in a patent application with a publication number of CN111442908A), the vignetting defect is 4.92%, and the center transmittance is 45%. Afterwards, a layer of gradient metal chromium film with a center thickness being 3 nm and an edge thickness being 1 nm is plated on the small end face by using the rotary light cone film-coating device, the vignetting defect is reduced to 1.81%, and the center transmittance is 40%. A test result is shown in FIG 12.

Specifically, the mounted rotary light cone film-coating device is put in the cavity of the magnetron sputtering machine, the motor is powered on, and the rotation speed of the rotary light cone film-coating device is adjusted to 10 rpm; and the cavity is closed and film coating is started, and a distance between the mask and the light cone is 1 mm.

Closing the cavity and starting film coating specifically include the following steps: a, the cavity of the film coating device is closed, then a mechanical pump is started for pre-vacuumizing, and when a vacuum degree is 10 Pa, the mechanical pump is shut down, the electromagnetic valve is opened, and the molecular pump is started; b, when the vacuum degree is 2×10⁻⁴ Pa, the gas flow meter is started, the gas flow of argon and the gas flow of oxygen are adjusted to 25 sccm (a volume ratio of argon to oxygen is 1:1), and then the pressure intensity in the cavity is adjusted to 0.8 Pa through the valve G; c, the sputtering power switch is turned on, pre-sputtering is started by adjusting the power to 50 W, pre-sputtering time is 5 minutes, then the baffle valve is opened, formal sputtering is started by adjusting the power to 60 W, and formal sputtering time is 40 seconds; d, after sputtering is completed, the baffle valve is closed, the power switch is turned off, the gas flow meter is switched to 0 through the rotary knob, the electromagnetic valve is closed, the molecular pump is shut down, and the valve connected with air is opened for balancing atmosphere pressure intensities inside and outside the cavity; and e, the cavity of the film coating device is opened, the rotary light cone film-coating device is taken out, film coating is finished, and then the light cone with high-uniformity and high-transmittance is obtained. The light cone may be applied in the charge-coupled device (CCD), the image intensifier or the photomultiplier tube.

It can be shown from FIG 12 that with the center transmittance of the cubic function type light cone decreasing from 45% to 40%, the vignetting defect decreases from 4.92% to 1.81%.

### Embodiment 4:

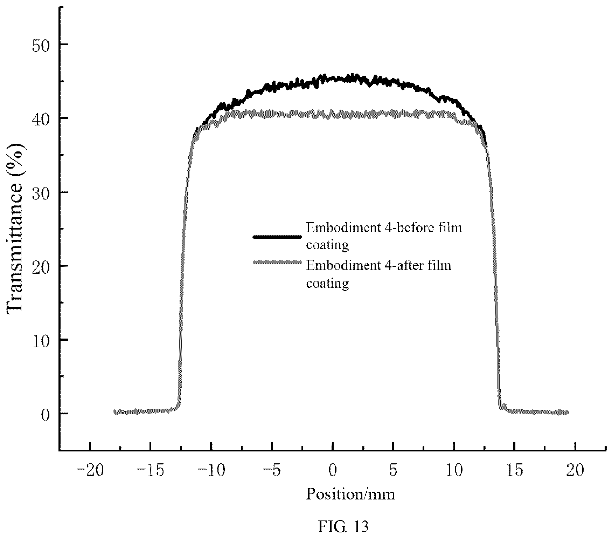

This embodiment provides a cubic function type light cone, which is fabricated specifically through the following steps:
S1, which is the same as Embodiment 3.
S2, which is the same as Embodiment 3.
S3, which is the same as Embodiment 3.
S4, afterwards, a layer of gradient metal chromium film with a center thickness being 3 nm and an edge thickness being 1 nm is plated on the large end face of the cubic function type light cone by using the rotary light cone film-coating device, the vignetting defect is reduced to 1.82 %, and the center transmittance is 40%. A test result is shown in FIG 13.

Specifically, the mounted rotary light cone film-coating device is put in the cavity of the magnetron sputtering machine, the motor is powered on, and the rotation speed of the rotary light cone film-coating device is adjusted to 10 rpm; and the cavity is closed and film coating is started, and a distance between the mask and the light cone is 1 mm.

Closing the cavity and starting film coating specifically include the following steps: a, the cavity of the film coating device is closed, then a mechanical pump is started for pre-vacuumizing, and when a vacuum degree is 10 Pa, the mechanical pump is shut down, the electromagnetic valve is opened, and the molecular pump is started; b, when the vacuum degree is 2×10⁻⁴ Pa, the gas flow meter is started, the gas flow of argon and the gas flow of oxygen are adjusted to 25 sccm (a volume ratio of argon to oxygen is 1:1), and then the pressure intensity in the cavity is adjusted to 0.8 Pa through the valve G; c, the sputtering power switch is turned on, pre-sputtering is started by adjusting the power to 50 W, pre-sputtering time is5 minutes, then the baffle valve is opened, formal sputtering is started by adjusting the power to 60 W, and formal sputtering time is 40 seconds; d, after sputtering is completed, the baffle valve is closed, the power switch is turned off, the gas flow meter is switched to 0 through the rotary knob, the electromagnetic valve is closed, the molecular pump is shut down, and the valve connected with air is opened for balancing atmosphere pressure intensities inside and outside the cavity; and e, the cavity of the film coating device is opened, the rotary light cone film-coating device is taken out, film coating is finished, and then the light cone with high-uniformity and high-transmittance is obtained. The light cone may be applied in the charge-coupled device (CCD), the image intensifier or the photomultiplier tube.

It can be shown from FIG 13 that the purpose of reducing the vignetting defect may be achieved by coating the homogenizing film at either the large end or the small end of the cubic function type light cone.

### Embodiment 5:

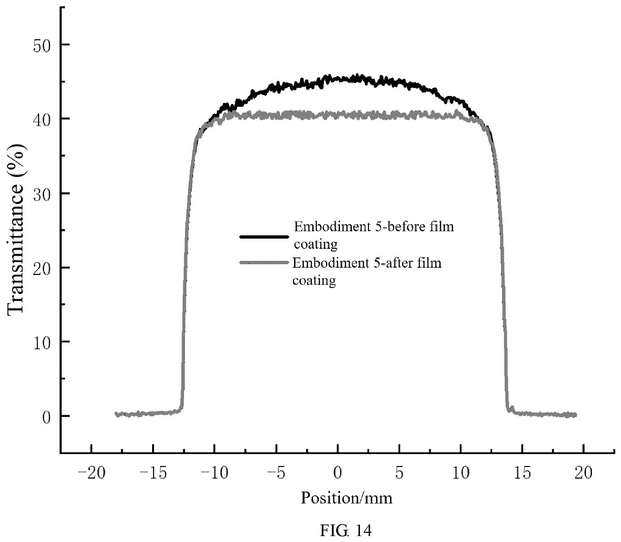

This embodiment provides a cubic function type light cone, which is fabricated specifically through the following steps:
S1, which is the same as Embodiment 3.
S2, which is the same as Embodiment 3.
S3, which is the same as Embodiment 3.
S4, a layer of gradient metal chromium film with a center thickness being 1.5 nm and an edge thickness being 0.5 nm is plated on the both large end face and the small end face of the cubic function type light cone at the same time by using the rotary light cone film-coating device, the vignetting defect is reduced to 1.78%, and the center transmittance is 40%. A test result is shown in FIG 14.

Specifically, the mounted rotary light cone film-coating device is put in the cavity of the magnetron sputtering machine, the motor is powered on, and the rotation speed of the rotary light cone film-coating device is adjusted to 10 rpm; and the cavity is closed and film coating is started, and a distance between the mask and the light cone is 1 mm.

Closing the cavity and starting film coating specifically include the following steps: a, the cavity of the film coating device is closed, then a mechanical pump is started for pre-vacuumizing, and when a vacuum degree is 10 Pa, the mechanical pump is shut down, the electromagnetic valve is opened, and the molecular pump is started; b, when the vacuum degree is 2×10⁻⁴ Pa, the gas flow meter is started, the gas flow of argon and the gas flow of oxygen are adjusted to 25 sccm (a volume ratio of argon to oxygen is 1:1), and then the pressure intensity in the cavity is adjusted to 0.8 Pa through the valve G; c, the sputtering power switch is turned on, pre-sputtering is started by adjusting the power to 50 W, pre-sputtering time is5 minutes, then the baffle valve is opened, formal sputtering is started by adjusting the power to 60 W, and formal sputtering time is 15 seconds; d, after sputtering is completed, the baffle valve is closed, the power switch is turned off, the gas flow meter is switched to 0 through the rotary knob, the electromagnetic valve is closed, the molecular pump is shut down, and the valve connected with air is opened for balancing atmosphere pressure intensities inside and outside the cavity; and e, the cavity of the film coating device is opened, the rotary light cone film-coating device is taken out, film coating is finished, and then the light cone with high-uniformity and high-transmittance is obtained. The light cone may be applied in the charge-coupled device (CCD), the image intensifier or the photomultiplier tube.

It can be shown from FIG 14 that the purpose of reducing the vignetting defect may be achieved by coating the homogenizing film at the both ends of the cubic function type light cone either at the same time or separately.

### Comparative example 1:

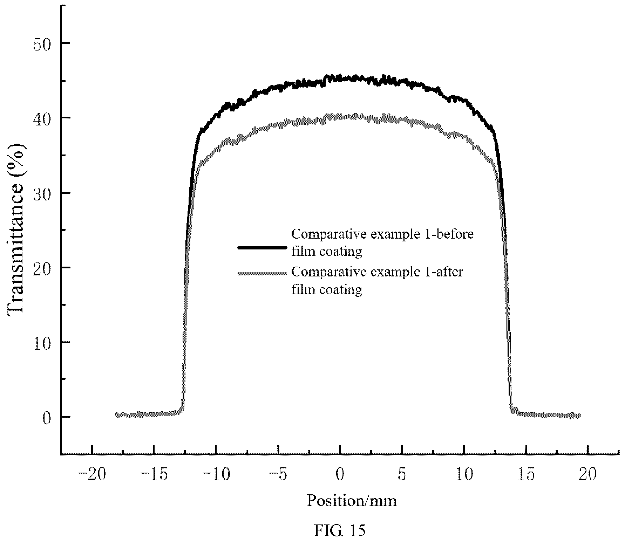

This comparative example has a difference from Embodiment 3 that this comparative example uses a conventional film coating method (no rotary film-coating device or mask is used, and other operation steps and parameters are the same as Embodiment 3), a layer of uniform film with a thickness being 3 nm is plated on the small end face of the cubic function type light cone, and through the transmittance test, the vignetting defect is reduced to 4.90%, and the center transmittance is 40%. A test result is shown in FIG 15. It can be shown from FIG 15 that the vignetting defect of the film with the uniform coating thickness is reduced from 4.92% to 4.90%, the center transmittance is reduced from 45% to 40%, the center transmittance is the same as Embodiment 3, but the vignetting defects are different by 3.09%, and it is shown that the chromium film with the uniform coating thickness cannot effectively overcome the vignetting defect.

### Comparative example 2:

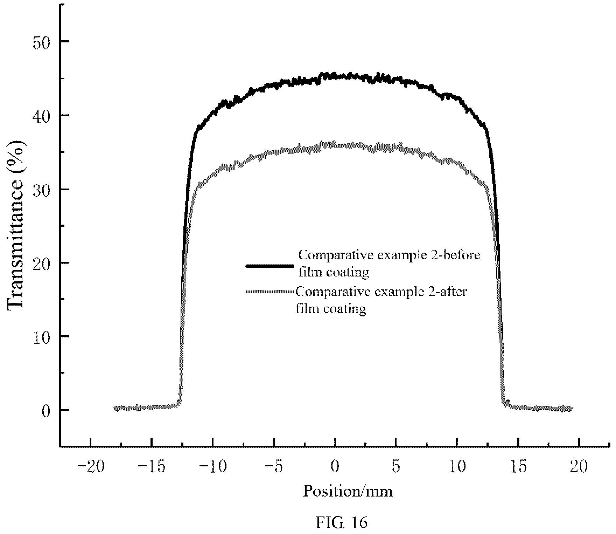

This comparative example has a difference from Embodiment 3 that this comparative example uses a conventional film coating method (no rotary film-coating device or mask is used, and other operation steps and parameters are the same as Embodiment 3), a layer of uniform film with a thickness being 5 nm is plated on the small end face of the cubic function type light cone, and through the transmittance test, the vignetting defect is reduced to 4.81%, and the center transmittance is 35%. A test result is shown in FIG 16. It can be shown from FIG 16 that the film thickness continues to increase, and compared with Embodiment 3, the vignetting defect increases by 3%, and the center transmittance is reduced by 5%. It is shown that increase of the film thickness by using the conventional method cannot overcome the vignetting defect.

Non-uniform transmittance and center transmittance of the light cones in Embodiments 1 to 3 and Comparative examples 1 to 2 before and after film coating are tested through the transmittance tester (namely, the device for detecting visible light transmittance and uniformity of the fiber optic image transmission element involved in a patent application with a publication number of CN111442908A), and test results are shown in Table 1. A test principle is: a beam of collimated incident light with a wavelength of 550 nm shines on an input end of the light cone, light coming out of an output end of the light is received through a CCD camera, a light intensity distribution diagram is obtained, and relative transmittance is calculated through a magnitude of a luminous flux of the input light and the output light. The luminous flux is equal to a light intensity times an area, and the light intensity is measured through the transmittance tester. The center transmittance is transmittance at a position 0 (a true center of the light cone). The non-uniform transmittance is a difference between the center transmittance and transmittance at an edge of an active area.

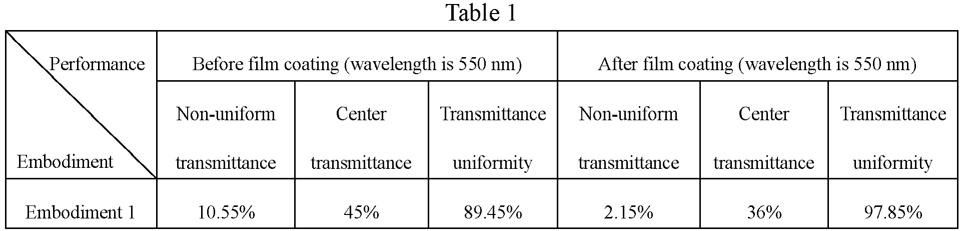

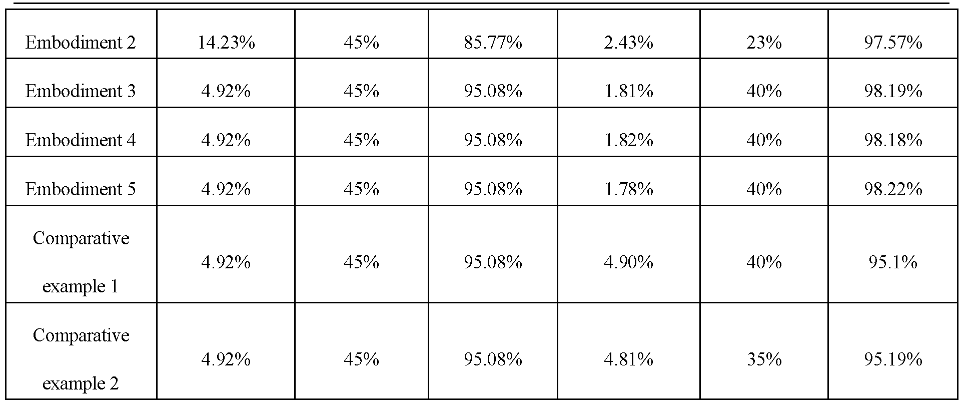

It can be shown from data in Table 1 that before film coating, when the center transmittance in Embodiments 1 to 3 remains 45%, the cubic function type light cone has the non-uniform transmittance of 4.92%, transmittance uniformity of 95.08% and the best structure. The quadratic function type light cone has the non-uniform transmittance of 14.23%, transmittance uniformity of 85.77% and the worst structure. After film coating, when it is guaranteed that the non-uniform transmittance is about 2.1% on average, the center transmittance of the cubic function type light cone may reach 40%, and the center transmittance of the quadratic function type light cone is only 23%, which indicates that the cubic function type light cone has the best structure. It can be shown from data in Embodiments 3 to 5 that if the homogenizing film is plated separately on the large end face or the small end face or simultaneously on the both end faces of the cubic function type light cone, the non-uniform transmittance may remain about 1.8%, and the center transmittance may reach 40%. It can be shown from data in Comparative examples 1 to 2 that if the chromium film is plated on the small end face of the cubic function type light cone without the rotary film-coating device, the non-uniform transmittance is almost not reduced, and the non-uniform transmittance cannot be relieved.

**In** short, to relieve transmission non-uniformity of the light cone in a film coating manner may be achieved by coating the homogenizing film with the middle being thick, the edge being thin and a radial thickness being gradient. The high transmittance in the center region of the light cone cooperates with the thick chromium film so as to greatly reduce the transmittance, the low transmittance at the edge cooperates with the thin chromium film so as to slightly reduce the transmittance, and thus the whole transmittance of the light cone remains on the same horizontal line and transmission non-uniformity is relieved.

Numerous specific details are set forth in the specification of the present application. However, it may be understood that the embodiments of the present application may be practiced without these specific details. **In** some embodiments, known methods, structures, and technologies are not shown in detail, so as not to make understanding on the specification vague.

It needs to be additionally noted that the various specific technical features described in the above specific implementations may be combined in any suitable mode without contradiction, and the present application does not additionally describe various possible combination modes for avoiding unnecessary repetitions.

In addition, various different implementations of the present application may also be combined in any way without violating the concept of the present application, which are also regarded as the contents disclosed by the present application.

The above description is only preferred embodiments of the present application instead of limiting the present application in any form. Any simple variation, equivalent change and modification made to the above embodiments according to the technical essence of the present application still fall within the scope of the technical solutions of the present application.

## Claims

1. A light cone with high-uniformity and high-transmittance, comprising a large end face portion, a small end face portion and an optical fiber portion arranged between the large end face portion and the small end face portion; wherein a surface of the large end face portion and/or the small end face portion has a film whose thickness gradually decreases from a center to an edge; and the thickness and position of the film satisfy: dx =-0.0002y⁴+2×10⁻¹⁵y³-0.0358y²-8×10⁻¹³y+8.8453, wherein x is the absolute thickness of the film, and y is a distance from a center to an edge.

2. The light cone with high-uniformity and high-transmittance according to claim 1, wherein a value of x is greater than 0, and a value of y is in a range from 0 to 11.5.

3. The light cone with high-uniformity and high-transmittance according to claim 1, wherein the light cone is a linear function type light cone, a quadratic function type light cone or a cubic function type light cone.

4. The light cone with high-uniformity and high-transmittance according to claim 1, wherein the film comprises a homogenizing film layer, and a center of the homogenizing film layer is provided with a film layer center.

5. A method for preparing a light cone with high-uniformity and high-transmittance, comprising the following steps:
preparing a tapered region profile structure; and
preparing a homogenizing film on a surface of the light cone.

6. The method for preparing a light cone with high-uniformity and high-transmittance according to claim 5, wherein preparing the tapered region profile structure comprises the following steps:
preparing a linear function type light cone, a quadratic function type light cone or a cubic function type light cone respectively according to a structure profile curve of a linear function distribution, a quadratic function distribution or a cubic function distribution.

7. The method for preparing a light cone with high-uniformity and high-transmittance according to claim 5, wherein preparing the homogenizing film on the surface of the light cone comprises the following steps:
coating a film with a thickness gradually decreasing from a center to an edge on the surface of the light cone.

8. The method for preparing a light cone with high-uniformity and high-transmittance according to claim 7, wherein the film comprises a homogenizing film layer, and a center of the homogenizing film layer is provided with a film layer center.

9. The method for preparing a light cone with high-uniformity and high-transmittance according to claim 5, wherein a rotation speed for coating the film whose thickness gradually decreases from a center to an edge is in a range from 10 rpm to 15 rpm; and during coating the film whose thickness gradually decreases from a center to an edge, a vacuum degree is less than or equal to 2×10⁻⁴ Pa, and a working pressure intensity is in a range from 0.8 Pa to 1.0 Pa.

10. The method for preparing a light cone with high-uniformity and high-transmittance according to claim 5, wherein during coating the film whose thickness gradually decreases from a center to an edge, argon and oxygen each have a gas flow ranging from 20 sccm to 30 sccm, and a volume ratio of argon to oxygen is 1:1; coating the film whose thickness gradually decreases from a center to an edge is achieved by sputtering; and pre-sputtering is started with power ranging from 30 W to 50 W, and then formal sputtering is started by adjusting the power to a range from 60 W to 80 W after pre-sputtering ranging from 3 minutes to 5 minutes , and formal sputtering time is in a range from 5 seconds to 300 seconds.

11. A charge-coupled device, comprising the light cone with high-uniformity and high-transmittance according to any one of claims 1 to 4.

12. An image intensifier, comprising the light cone with high-uniformity and high-transmittance according to any one of claims 1 to 4.

13. A photomultiplier tube, comprising the light cone with high-uniformity and high-transmittance according to any one of claims 1 to 4.
